# EUROPEAN PATENT SPECIFICATION

(11) **EP 4 663 154 B1**
(45) Date of publication and mention of the grant of the patent: **02.12.2026**
(21) Application number: 25181732.6
(22) Date of filing: 10.06.2025
(51) Int. Cl.: A61C 1/05, A61C 1/12

(54) **DENTAL HANDPIECE**
ZAHNÄRZTLICHES HANDSTÜCK
PIÈCE À MAIN DENTAIRE

(30) Priority: 10.06.2024 JP 2024093459
(43) Date of publication of application: 17.12.2025
(73) Proprietor: J. MORITA MFG. CORP., Fushimi-ku Kyoto-shi Kyoto 612-8533 (JP)
(72) Inventor: NORICHIKA, Takaaki, Kyoto-shi, Kyoto, 612-8533 (JP); MIKAMI, Shinji, Kyoto-shi, Kyoto, 612-8533 (JP)
(74) Representative: Müller Hoffmann & Partner

(56) References cited:
- AT-B- 403 882
- JP-B2- 4 879 164

## Description

### CROSS REFERENCE TO RELATED APPLICATIONS

This application is based on Japanese Patent Application No. 2024-093459 filed on June 10, 2024 with the Japan Patent Office.

### BACKGROUND

### Field

The present disclosure relates to a dental handpiece.

### Description of the Background Art

As a cutting instrument in the field of dentistry, there has been conventionally known a dental handpiece including a body configured to be grasped by a user such as an operator, and a head provided at a tip end of the body, wherein air is supplied to a rotor provided in the head, thereby rotating a cutting tool connected to the rotor. In such a dental handpiece, there occurs a phenomenon in which even after the supply of the air to the rotor is stopped, the rotor rotates by inertia, whereby the inside of the head functions like a pump to suck saliva, blood or the like of a patient. Such a phenomenon is also referred to as suck back. Each of Japanese Patent No. 4160319 and Japanese Patent No. 4879164 discloses a dental handpiece having a mechanism for preventing suck back.

The dental handpiece disclosed in Japanese Patent No. 4160319 is configured such that air used to rotate a rotor is accumulated in an outer circumferential gap formed from an inner housing to an outer housing, thereby forming an air seal between the inside and the outside of a head. The dental handpiece disclosed in Japanese Patent No. 4879164 is configured such that air used to rotate a rotor is accumulated in a buffer space formed inside a head and the air accumulated in the buffer space is discharged from the head after supply of the air to the rotor is stopped, thereby preventing the inside of the head from having a negative pressure.

### SUMMARY

According to the dental handpiece disclosed in each of Japanese Patent No. 4160319 and Japanese Patent No. 4879164, suck back can be prevented. However, the mechanism for preventing suck back may result in a significant decrease in torque of a cutting tool rotated by the rotor.

The present disclosure has been made to solve the above-described problem, and an object of the present disclosure is to provide a dental handpiece that prevents suck back while suppressing a decrease in torque of a cutting tool rotated by a rotor.
This is achieved by the claimed subject-matter which defines the present invention.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing an appearance of a dental handpiece.
Fig. 2 is a cross-sectional view of a head showing an internal structure of the head.
Fig. 3 is a diagram for illustrating a structure of blades.
Fig. 4 is a perspective view of the head showing the inner side of the head.
Fig. 5 is a top view of the head showing the inner side of the head.
Fig. 6 is a cross-sectional view of the head taken in the axial direction along A-A' in Fig. 5.
Fig. 7 is a cross-sectional view of the head taken in the axial direction along B-B' in Fig. 5.
Fig. 8 is a diagram for illustrating a flow of air that is supplied from a body to the head and discharged from an air discharge port.
Fig. 9 is a diagram for illustrating a flow of air that is supplied from the body to the head and discharged from the air discharge port.
Fig. 10 is a diagram for illustrating a flow of air that is supplied from the body to the head and discharged from the air discharge port.
Fig. 11 is a diagram for illustrating a flow of air that is supplied from the body to the head and discharged from the air discharge port.
Fig. 12 is a diagram for illustrating a flow of air that is supplied from the body to the head and discharged from the air discharge port.
Fig. 13 is a diagram for illustrating a flow of air that is supplied from the body to the head and discharged from the air discharge port.
Fig. 14 is a diagram for illustrating a flow of air that is supplied from the body to the head and discharged from the air discharge port.
Fig. 15 is a diagram for illustrating a flow of air that is supplied from the body to the head and discharged from the air discharge port.
Fig. 16 is a diagram for illustrating a flow of air that is supplied from the body to the head and discharged from the air discharge port.
Fig. 17 is a diagram for illustrating a flow of air that is supplied from the body to the head and discharged from the air discharge port.
Fig. 18 is a diagram for illustrating a flow of air that is supplied from the body to the head and discharged from the air discharge port.
Fig. 19 is a diagram for illustrating a flow of air that is supplied from the body to the head and discharged from the air discharge port.
Fig. 20 is a diagram for illustrating a flow of air that is supplied from the body to the head and discharged from the air discharge port.
Fig. 21 is a diagram for illustrating a flow of air that is supplied from the body to the head and discharged from the air discharge port.
Fig. 22 is a diagram for illustrating a flow of air that is supplied from the body to the head and discharged from the air discharge port.
Fig. 23 is a diagram for illustrating a flow of air that is supplied from the body to the head and discharged from the air discharge port.

### DESCRIPTION

The present disclosure will be described in detail with reference to the drawings. In the drawings, the same or corresponding portions are denoted by the same reference characters, and description thereof will not be repeated.

### [Configuration of Dental Handpiece]

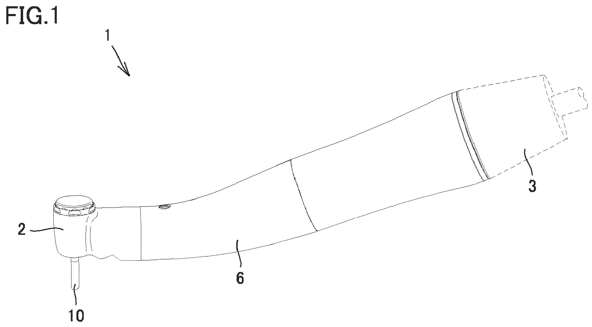

A main configuration of a dental handpiece 1 will be described with reference to Figs. 1 to 7. Fig. 1 is a diagram showing an appearance of dental handpiece 1. As shown in Fig. 1, dental handpiece 1 includes a body 6 configured to be grasped by a user such as an operator, and a head 2 provided at a tip end of body 6.

A driving unit 3 is detachably connected to one end of body 6. Head 2 is detachably connected to the other end of body 6. Body 6 includes a housing having a substantially cylindrical shape and gradually decreases in diameter from driving unit 3 toward head 2. Head 2 detachably holds a cutting tool 10 for cutting a tooth. Driving unit 3 supplies air for rotating cutting tool 10 held by head 2 (air for driving) to head 2 through body 6. Dental handpiece 1 is an air turbine handpiece configured to rotate cutting tool 10 at high speed by using the air supplied from driving unit 3.

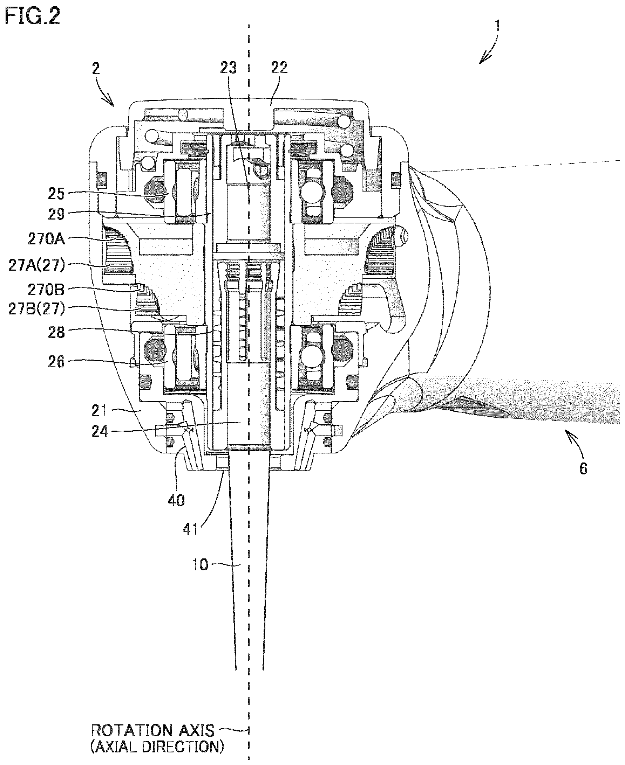

Fig. 2 is a cross-sectional view of head 2 showing an internal structure of head 2. As shown in Fig. 2, head 2 includes a housing 21, a push cap 22, a ring holder 23, a holding portion 24, a first bearing portion 25, a second bearing portion 26, a first rotor 27A, a second rotor 27B, an elastic body 28, a rotary cylinder 29, and a protruding portion 40. Push cap 22, ring holder 23, holding portion 24, first bearing portion 25, second bearing portion 26, first rotor 27A, second rotor 27B, elastic body 28, rotary cylinder 29, and protruding portion 40 are provided inside housing 21. Hereinafter, a direction along a rotation axis of cutting tool 10 will also be referred to as "axial direction". In addition, in the axial direction, a direction in which a tip end of cutting tool 10 faces will be referred to as a downward direction or below, and a direction opposite to the direction in which the tip end of cutting tool 10 faces will be referred to as an upward direction or above.

Push cap 22 protrudes upward from housing 21 and can be pressed downward by the user.

Ring holder 23 is a cylindrical member disposed below push cap 22. Ring holder 23 moves in the axial direction with pressing of push cap 22 by the user.

Holding portion 24 is a cylindrical member disposed below ring holder 23 and is held in a circumferential direction by ring holder 23. The user can insert cutting tool 10 into a hollow portion of holding portion 24 from below to above. Holding portion 24 holds cutting tool 10 inserted into the hollow portion.

Protruding portion 40 is a ring-shaped member protruding downward from housing 21 and is disposed below holding portion 24. Protruding portion 40 has an opening 41 through which cutting tool 10 is inserted into holding portion 24. The user can attach cutting tool 10 to holding portion 24 by inserting cutting tool 10 into the hollow portion of holding portion 24 through opening 41 of protruding portion 40.

Elastic body 28 is a compression elastic body that can be deformed in a compression direction, and biases holding portion 24 such that holding portion 24 is engaged with cutting tool 10. When the user presses push cap 22, holding portion 24 moves downward together with ring holder 23 and elastic body 28 is compressed and deformed, whereby holding of cutting tool 10 by holding portion 24 is released.

Rotary cylinder 29 is a cylindrical member. Ring holder 23, holding portion 24 and elastic body 28 are housed in a hollow portion of rotary cylinder 29. Rotary cylinder 29 is connected to first rotor 27A and second rotor 27B. When first rotor 27A and second rotor 27B rotate along a circumferential direction of rotary cylinder 29, rotary cylinder 29 also rotates. When rotary cylinder 29 rotates, holding portion 24 housed in rotary cylinder 29 also rotates, and with the rotation of holding portion 24, cutting tool 10 held by holding portion 24 also rotates.

First bearing portion 25 and second bearing portion 26 are provided on the outer circumferential side of rotary cylinder 29 and rotatably support rotary cylinder 29. Second bearing portion 26 is disposed below first bearing portion 25.

First rotor 27A and second rotor 27B are provided on the outer circumferential side of rotary cylinder 29 and are configured to rotate inside housing 21. First rotor 27A and second rotor 27B are disposed between first bearing portion 25 and second bearing portion 26 in the axial direction. Second rotor 27B is disposed below first rotor 27A. In other words, second rotor 27B is disposed on the side closer to the tip end of cutting tool 10 than first rotor 27A in the axial direction.

First rotor 27A includes a plurality of blades 270A. When the air supplied from driving unit 3 through body 6 hits blades 270A, blades 270A are pushed from the windward side to the leeward side of the air and blades 270A (i.e., first rotor 27A) rotate. Second rotor 27B includes a plurality of blades 270B. When the air supplied from driving unit 3 through body 6 hits blades 270B, blades 270B are pushed from the windward side to the leeward side of the air and blades 270B (i.e., second rotor 27B) rotate. Hereinafter, first rotor 27A and second rotor 27B will also be collectively referred to as "rotor 27". In addition, a direction in which rotor 27 rotates by the air supplied from driving unit 3 through body 6 will also be referred to as "specific direction".

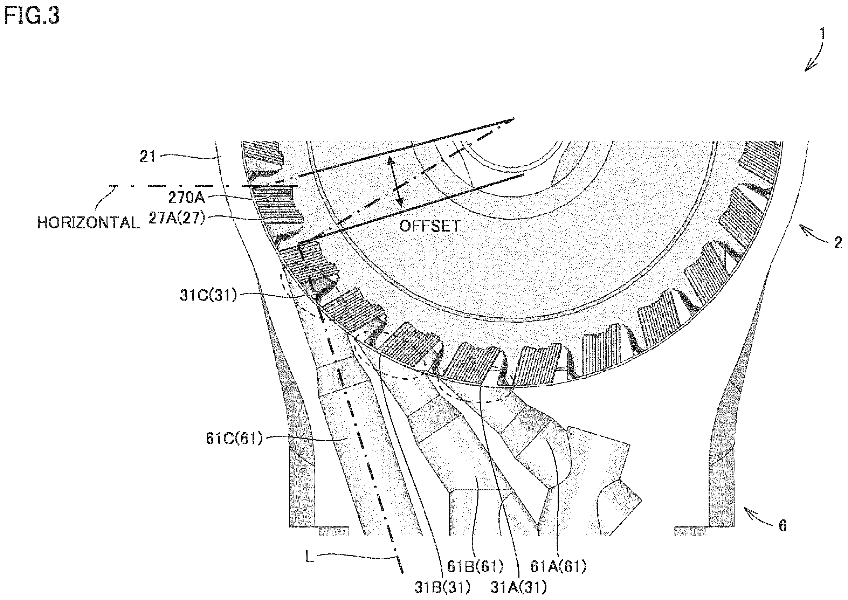

Fig. 3 is a diagram for illustrating a structure of blades 270A. As shown in Fig. 3, when first rotor 27A is viewed from above to below, the plurality of blades 270A are disposed at equal intervals along the circumferential direction on the inner diameter side of first rotor 27A.

Body 6 of dental handpiece 1 includes a supply tube 61A, a supply tube 61B and a supply tube 61C configured to supply the air from driving unit 3 to rotor 27. Housing 21 of head 2 includes an air supply port 31A, an air supply port 31B and an air supply port 31C corresponding to supply tube 61A, supply tube 61B and supply tube 61C, respectively.

The air from driving unit 3 having flowed through supply tube 61A is supplied from air supply port 31A to first rotor 27A provided inside housing 21. The air from driving unit 3 having flowed through supply tube 61B is supplied from air supply port 31B to first rotor 27A provided inside housing 21. The air from driving unit 3 having flowed through supply tube 61C is supplied from air supply port 31C to first rotor 27A provided inside housing 21. Hereinafter, supply tube 61A, supply tube 61B and supply tube 61C will also be collectively referred to as "supply tube 61". Air supply port 31A, air supply port 31B and air supply port 31C will also be collectively referred to as "air supply port 31".

Air supply port 31 is disposed along the circumferential direction of first rotor 27A. Furthermore, air supply port 31 is disposed so as to allow the air supplied from air supply port 31 to hit blades 270A included in first rotor 27A perpendicularly or substantially perpendicularly.

Specifically, each of blades 270A includes, along the axial direction, a blade surface hit by the air supplied from air supply port 31. The position of blade 270A varies as a result of rotation, and depending on the position, an axis L along the air passage at air supply port 31 may be orthogonal to the blade surface. In addition, the position of blade 270A when axis L of air supply port 31 is orthogonal to the blade surface is offset to the air supply port 31 side with respect to a reference position such that the position is as close as possible to air supply port 31. Note that the reference position refers to a position where the blade surface of blade 270A becomes horizontal when first rotor 27A is viewed from above to below, with body 6 being disposed on the front side and head 2 being disposed on the back side, as shown in Fig. 3.

If the number of blades 270A of first rotor 27A and the number of blades 270B of second rotor 27B are decreased, a resistance to the air supplied from air supply port 31 decreases, and thus, a flow rate of the air increases. However, a distance between the adjacent blades becomes greater, and thus, a flow velocity of the air decreases. Therefore, each of the number of blades 270A of first rotor 27A and the number of blades 270B of second rotor 27B is preferably twenty-four or more.

In dental handpiece 1 configured as described above, the air is supplied to rotor 27 provided in head 2 through air supply port 31, whereby rotor 27 rotates in the specific direction at high speed. With the rotation of rotor 27, cutting tool 10 held by holding portion 24 also rotates in the specific direction at high speed. As a result, the user can cut a tooth with the use of the cutting tool. When the supply of the air to rotor 27 is stopped, rotor 27 rotates by inertia, whereby the inside of head 2 functions like a pump, which may cause suck back. In addition, when the supply of the air from driving unit 3 is stopped, the inside of head 2 has a negative pressure lower than a pressure outside dental handpiece 1, which may also cause suck back. However, as described below, dental handpiece 1 has structural improvements to prevent the occurrence of such suck back.

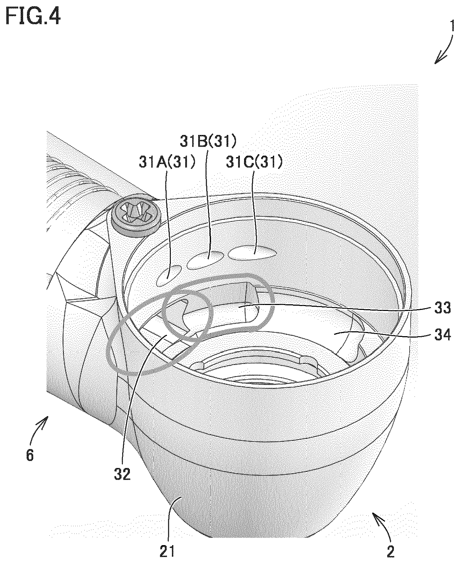

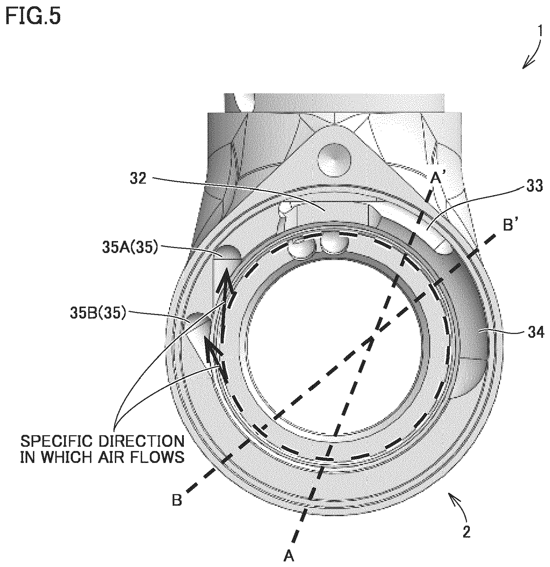

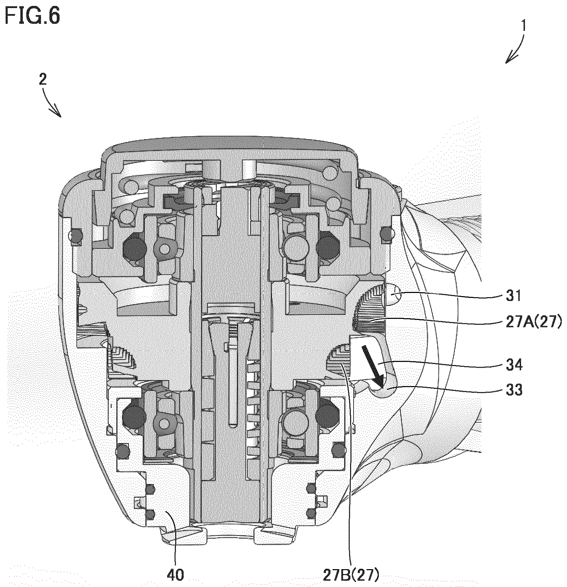

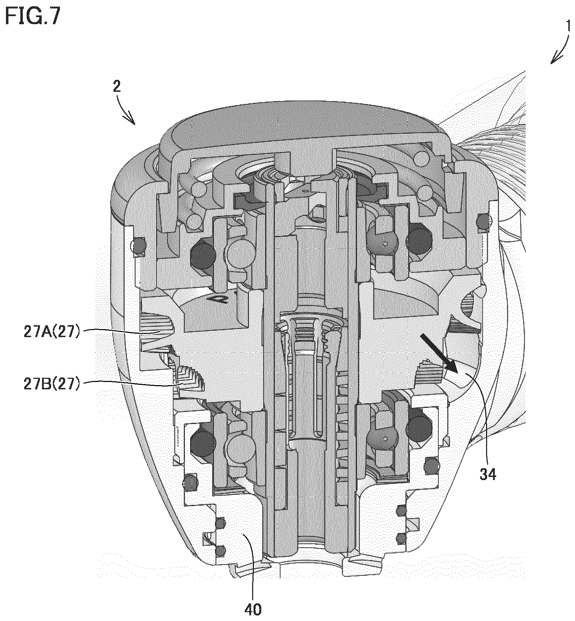

Fig. 4 is a perspective view of head 2 showing the inner side of head 2. Fig. 5 is a top view of head 2 showing the inner side of head 2. Fig. 6 is a cross-sectional view of the head taken in the axial direction along A-A' in Fig. 5. Fig. 7 is a cross-sectional view of the head taken in the axial direction along B-B' in Fig. 5. As shown in Figs. 4 to 7, housing 21 includes air supply port 31, an air discharge port 32, a first air-retaining portion 33, a second air-retaining portion 34, a diffuser portion 35A, and a diffuser portion 35B.

Air discharge port 32 is formed below air supply port 31 in housing 21. In other words, air discharge port 32 is disposed on a side closer to the tip end of cutting tool 10 than air supply port 31 in the axial direction. Furthermore, air discharge port 32 is disposed along a circumferential direction of second rotor 27B. Air discharge port 32 discharges, from the inside of housing 21, the air used to rotate rotor 27 in the inside of housing 21.

First air-retaining portion 33 is formed below air supply port 31 in housing 21 and communicates with air discharge port 32. In other words, first air-retaining portion 33 is disposed on a side closer to the tip end of cutting tool 10 than air supply port 31 in the axil direction. Furthermore, first air-retaining portion 33 is disposed along the circumferential direction of second rotor 27B, similarly to air discharge port 32.

As shown in Figs. 4 and 6, first air-retaining portion 33 has a space formed below second rotor 27B in the axial direction. Specifically, first air-retaining portion 33 is a recessed portion obtained by cutting a part of an inner surface of housing 21. For example, a cross section of the recessed portion in first air-retaining portion 33 along the rotation axis has a tapered shape or an R shape. The recessed portion in first air-retaining portion 33 may have any depth that allows the air to be retained and accumulated therein, and the cross section may have any shape other than the tapered shape or the R shape. First air-retaining portion 33 retains and accumulates, in the recessed portion, a part of the air used to rotate rotor 27 in the inside of housing 21.

Second air-retaining portion 34 is formed below air supply port 31 in housing 21 and communicates with first air-retaining portion 33. In other words, second air-retaining portion 34 is disposed on a side closer to the tip end of cutting tool 10 than air supply port 31 in the axial direction. Furthermore, second air-retaining portion 34 is disposed along the circumferential direction of second rotor 27B, similarly to air discharge port 32 and first air-retaining portion 33.

As shown in Figs. 4 and 7, second air-retaining portion 34 has a space formed at the same position as that of second rotor 27B or below second rotor 27B in the axial direction. Specifically, second air-retaining portion 34 is a recessed portion obtained by cutting a part of the inner surface of housing 21. For example, a cross section of the recessed portion in second air-retaining portion 34 along the rotation axis has a tapered shape or an R shape. The recessed portion in second air-retaining portion 34 may have any depth that allows the air to be retained and accumulated therein, and the cross section may have any shape other than the tapered shape or the R shape. A volume of the recessed portion in second air-retaining portion 34 is different from a volume of the recessed portion in first air-retaining portion 33. For example, the volume of the recessed portion in second air-retaining portion 34 is larger than the volume of the recessed portion in first air-retaining portion 33. Therefore, second air-retaining portion 34 can retain and accumulate a larger volume of air in the recessed portion than first air-retaining portion 33. Since the recessed portion in first air-retaining portion 33 is formed to extend more downward than the recessed portion in second air-retaining portion 34 in the axial direction, the air accumulated in second air-retaining portion 34 can flow to first air-retaining portion 33.

Diffuser portion 35A and diffuser portion 35B are formed in housing 21. Furthermore, diffuser portion 35A and diffuser portion 35B are disposed along the circumferential direction of second rotor 27B, similarly to air discharge port 32, first air-retaining portion 33 and second air-retaining portion 34. Furthermore, diffuser portion 35A and diffuser portion 35B are disposed at positions farther from air supply port 31 and air discharge port 32 than first air-retaining portion 33 and second air-retaining portion 34.

As shown in Fig. 5, diffuser portion 35A and diffuser portion 35B are recessed portions obtained by cutting a part of the inner surface of housing 21 along the specific direction in which the air supplied from air supply port 31 flows while pushing blades 270A of first rotor 27A and blades 270B of second rotor 27B. Diffuser portion 35A and diffuser portion 35B retain and accumulate, in the recessed portions, the air used to rotate rotor 27 in the inside of housing 21. Furthermore, diffuser portion 35A and diffuser portion 35B are configured to change a flow direction of a part of the air supplied from air supply port 31 so as to direct the part of the air toward rotor 27 in a direction opposite to the specific direction. Hereinafter, diffuser portion 35A and diffuser portion 35B will also be collectively referred to as "diffuser portion 35".

### [Flow of Air in Dental Handpiece]

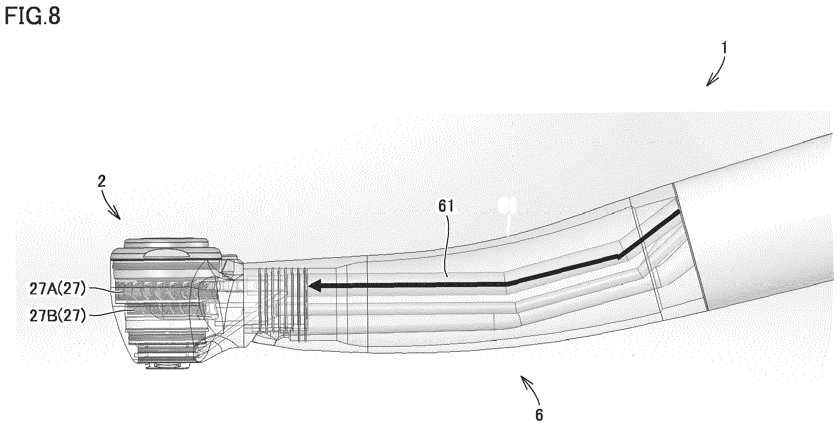

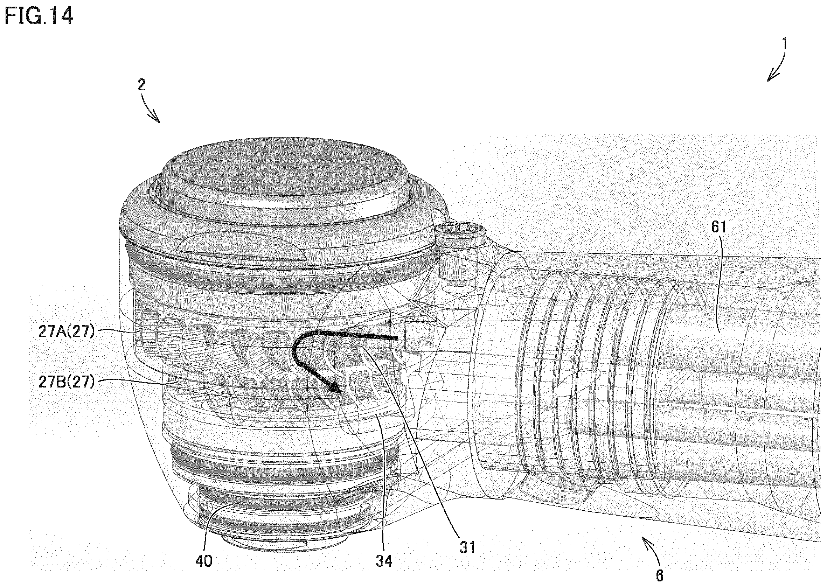

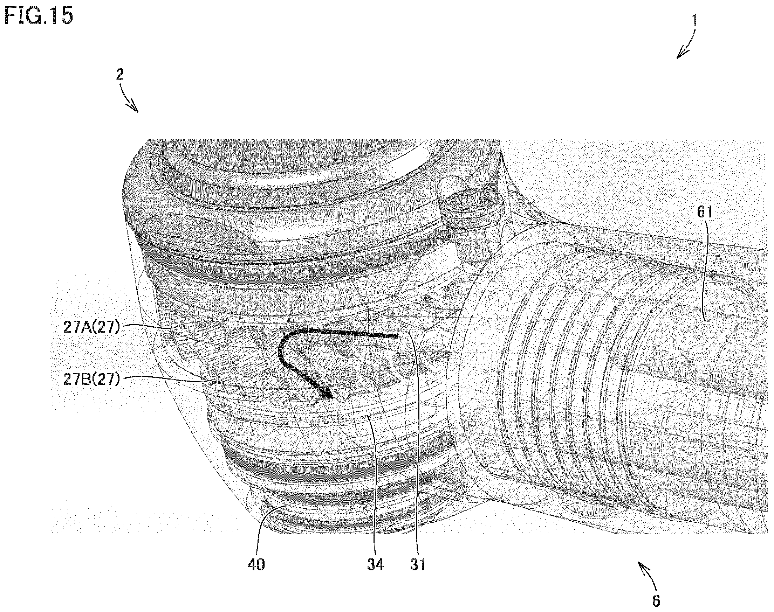

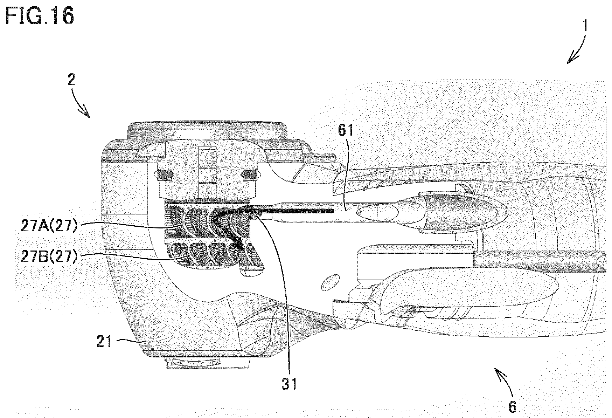

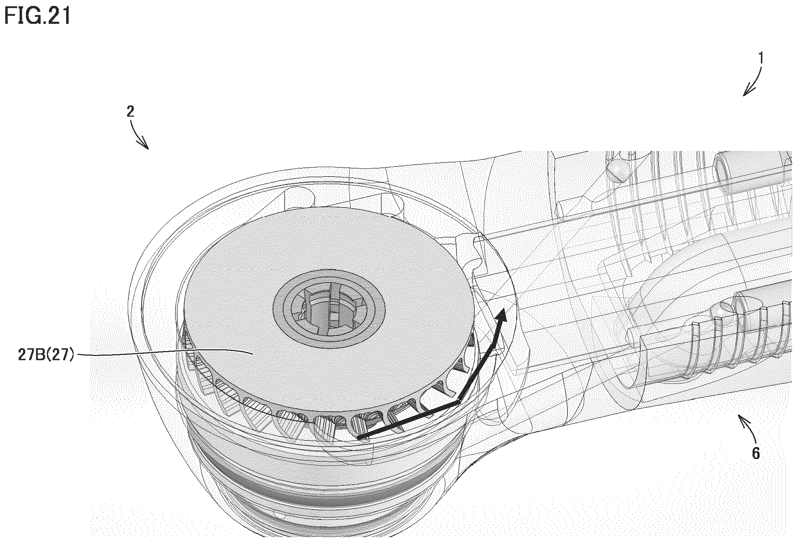

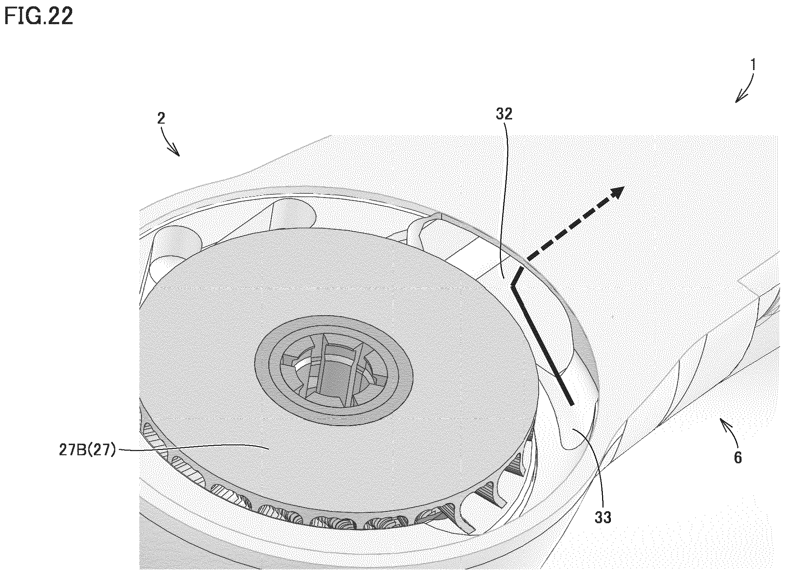

A flow of the air in dental handpiece 1 will be described with reference to Figs. 8 to 23. Each of Figs. 8 to 23 is a diagram for illustrating the flow of the air that is supplied from body 6 to head 2 and discharged from air discharge port 32.

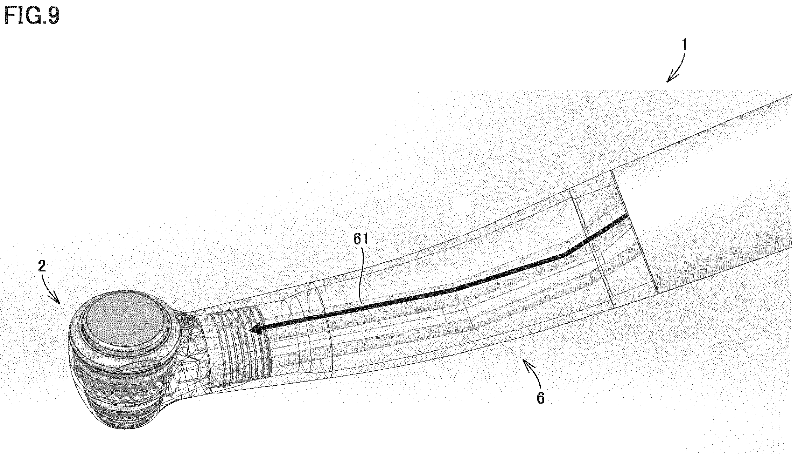

As shown in Figs. 8 and 9, the air supplied from driving unit 3 flows to head 2 through supply tube 61 provided inside body 6.

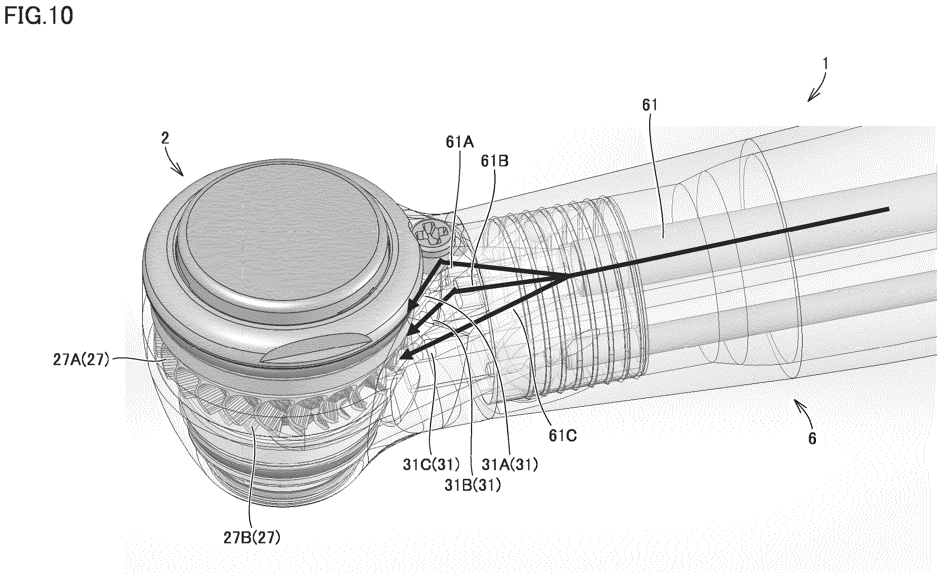

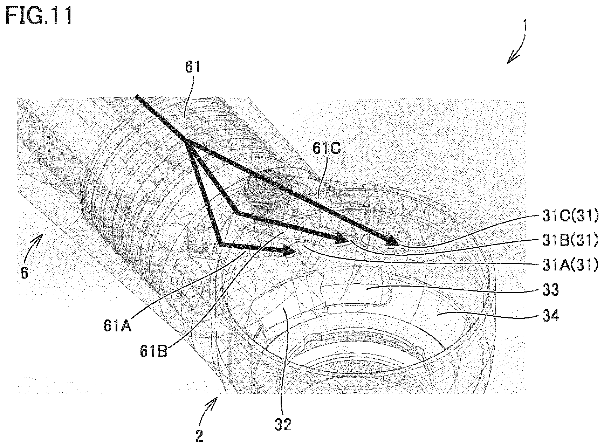

As shown in Figs. 10 and 11, supply tube 61 branches into supply tube 61A, supply tube 61B and supply tube 61C at some intermediate position of the path. Therefore, the air supplied from body 6 flows through each of supply tube 61A, supply tube 61B and supply tube 61C.

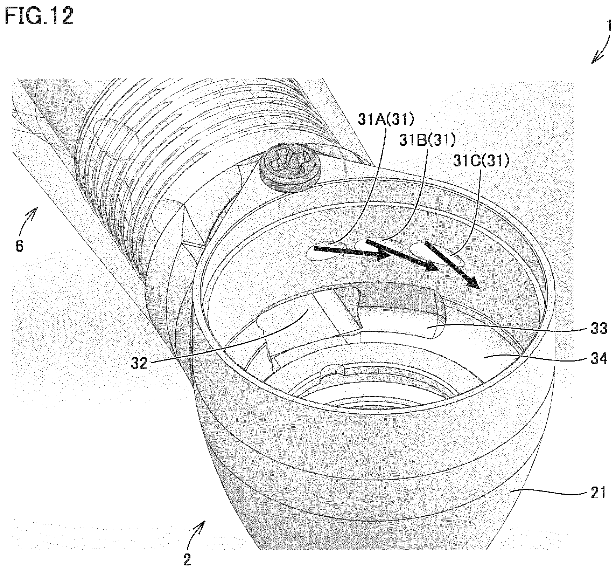

As shown in Fig. 12, the air having flowed through supply tube 61A, supply tube 61B and supply tube 61C flows into head 2 through air supply port 31A, air supply port 31B and air supply port 31C formed in housing 21 of head 2, respectively.

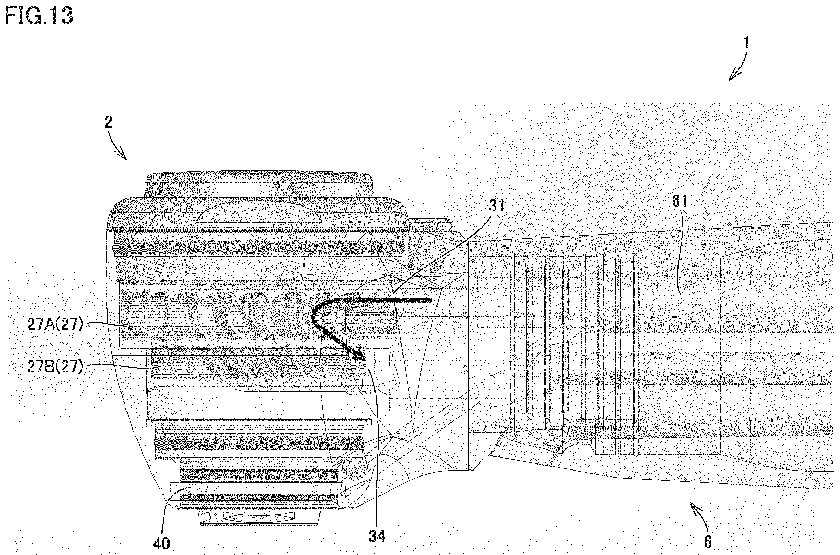

As shown in Figs. 13 to 16, the air having flowed into head 2 through air supply port 31 hits blades 270A of first rotor 27A firstly. As a result, first rotor 27A is pushed by the air and rotates in the specific direction at high speed. A part of the air having pushed blades 270A of first rotor 27A flows to second rotor 27B disposed below first rotor 27A in the axial direction and hits blades 270B of second rotor 27B. As a result, second rotor 27B is pushed by the air and rotates in the specific direction at high speed.

Furthermore, as shown in Fig. 5, the air flowing in the specific direction while pushing blades 270B of second rotor 27B is retained and accumulated in diffuser portion 35A and diffuser portion 35B.

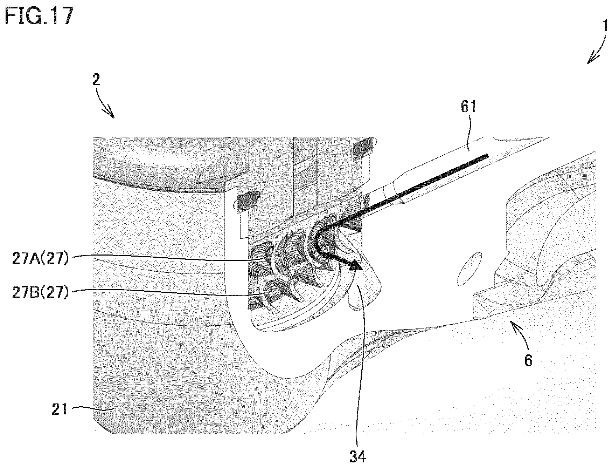

As shown in Fig. 17, a part of the air having pushed blades 270B of second rotor 27B flows to second air-retaining portion 34 and is retained and accumulated in second air-retaining portion 34.

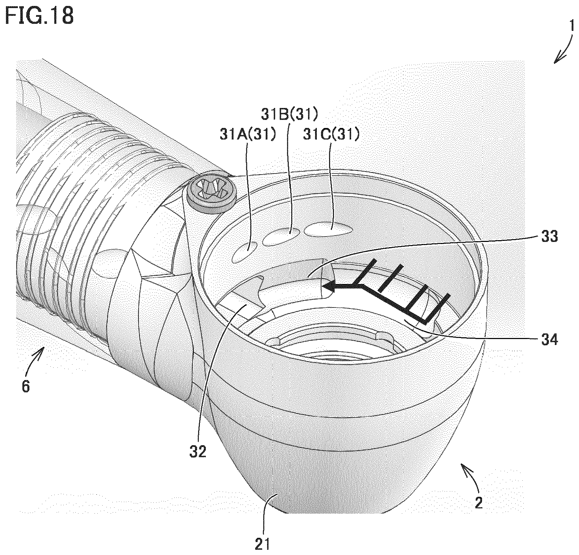

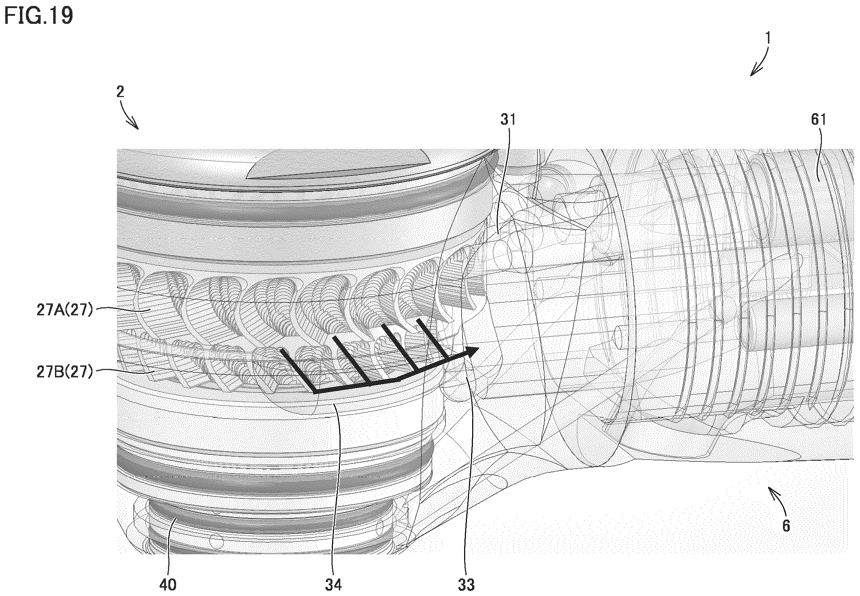

As shown in Figs. 18 and 19, a part of the air having flowed through second air-retaining portion 34 flows to first air-retaining portion 33 and is retained and accumulated in first air-retaining portion 33.

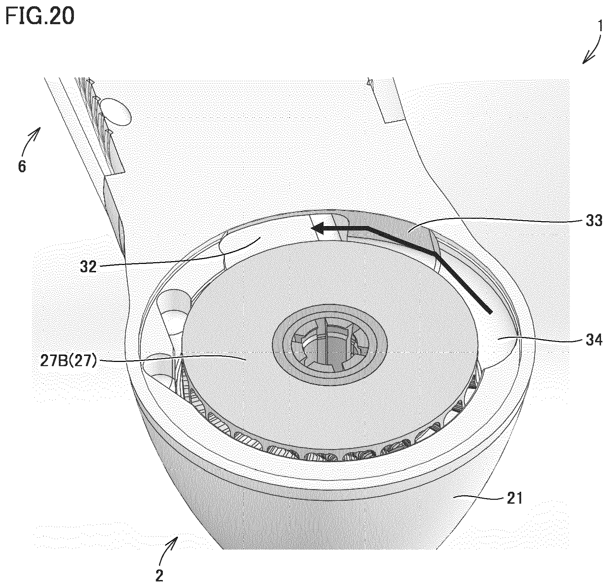

As shown in Figs. 20 to 22, the air having flowed through first air-retaining portion 33 is discharged from the inside of head 2 to the inside of body 6 through air discharge port 32.

As described above, as shown in Figs. 17 to 22, the air supplied from air supply port 31 to the inside of head 2 is smoothly discharged from air discharge port 32 through the flow path enlarged by first air-retaining portion 33 and second air-retaining portion 34 before air discharge port 32.

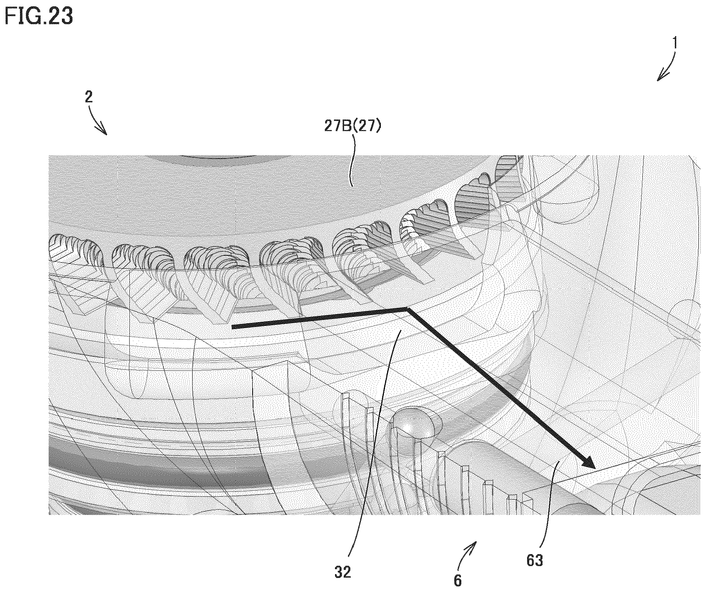

As shown in Fig. 23, the air having flowed into body 6 through air discharge port 32 is discharged to the outside of dental handpiece 1 through an air discharge tube 63 provided inside body 6.

In the above-described flow of the air in the inside of head 2, dental handpiece 1 prevents the occurrence of suck back as described below.

Specifically, when the supply of the air from driving unit 3 stops, rotor 27 attempts to rotate in the specific direction by inertia. At this time, the air retained and accumulated in diffuser portion 35 flows in the direction opposite to the specific direction, thereby attempting to rotate rotor 27 in the direction opposite to the specific direction. As a result, dental handpiece 1 can reduce the momentum of the inertial rotation of rotor 27 and suppress the inertial rotation of rotor 27. Thus, dental handpiece 1 can prevent the inside of head 2 from functioning like a pump due to the inertial rotation of rotor 27.

Furthermore, since the air is accumulated in first air-retaining portion 33 and second air-retaining portion 34 even when the supply of the air from driving unit 3 stops, dental handpiece 1 can prevent the inside of head 2 from having a negative pressure and prevent the occurrence of a pressure difference between the inside of head 2 and the outside of dental handpiece 1. The air accumulated in first air-retaining portion 33 and second air-retaining portion 34 is discharged little by little from air discharge port 32. Thus, dental handpiece 1 can prevent the occurrence of suck back due to the pressure difference between the inside of head 2 and the outside of dental handpiece 1.

In order to prevent suck back, it is also conceivable to increase the number of diffuser portions 35 to reduce the momentum of the inertial rotation of rotor 27 more effectively. However, diffuser portion 35 is configured to change the flow direction of a part of the air supplied from air supply port 31 so as to direct the part of the air toward rotor 27 in the direction opposite to the specific direction. Therefore, changing the flow of the air by diffuser portion 35 during supply of the air from driving unit 3 may cause a decrease in torque of cutting tool 10 rotated by rotor 27.

In this regard, by further including first air-retaining portion 33 and second air-retaining portion 34 that prevent the inside of head 2 from having a negative pressure, in addition to diffuser portion 35A and diffuser portion 35B, not by significantly increasing the number of diffuser portions 35, dental handpiece 1 can prevent suck back while suppressing a decrease in torque of cutting tool 10 rotated by rotor 27.

From the perspective of increasing the torque of cutting tool 10, it is desirable not to provide diffuser portion 35. In this case, however, the momentum of the inertial rotation of rotor 27 cannot be reduced and prevention of suck back is difficult. Therefore, it is preferable that dental handpiece 1 should include any number of diffuser portions 35 (e.g., two diffuser portions 35) that make it possible to reduce the momentum of the inertial rotation of rotor 27 while maintaining the torque of cutting tool 10 high, and further include first air-retaining portion 33 and second air-retaining portion 34 in order to prevent suck back.

Furthermore, in dental handpiece 1, air supply port 31 is disposed so as to allow the air supplied from air supply port 31 to hit blades 270A included in first rotor 27A perpendicularly or substantially perpendicularly. Therefore, even when diffuser portion 35 directs a part of the air supplied from air supply port 31 toward rotor 27 in the direction opposite to the specific direction, the air supplied from air supply port 31 hits blades 270A perpendicularly or substantially perpendicularly, and thus, the torque of cutting tool 10 can be maintained high.

### [Modifications]

Dental handpiece 1 according to the present disclosure is not limited to the above description and various further modifications and applications are possible. Modifications that can be applied to dental handpiece 1 according to the present disclosure will be described below.

Dental handpiece 1 is not limited to including two-tier rotor 27 including first rotor 27A located in the upper tier in the axial direction and second rotor 27B located in the lower tier in the axial direction. For example, dental handpiece 1 may include one rotor 27. In this case, air supply port 31, air discharge port 32, first air-retaining portion 33, and second air-retaining portion 34 may be disposed in a circumferential direction of one rotor 27. Alternatively, dental handpiece 1 may include three or more rotors 27 disposed in three or more tiers in the axial direction. In this case, air discharge port 32, first air-retaining portion 33 and second air-retaining portion 34 may be disposed in a circumferential direction of rotor 27 located in the lowermost tier in the axial direction, and air supply port 31 may be disposed in a circumferential direction of rotor 27 located above this lowermost rotor 27.

Dental handpiece 1 is not limited to including three air supply ports 31 including air supply port 31A, air supply port 31B and air supply port 31C. For example, dental handpiece 1 may include one or two air supply ports 31, or may include four or more air supply ports 31.

Dental handpiece 1 is not limited to including two diffuser portions 35 including diffuser portion 35A and diffuser portion 35B. For example, dental handpiece 1 may include one diffuser portion 35, or may include three or more diffuser portions 35. As described above, the number of diffuser portions 35 may be determined in consideration of an increase in torque of cutting tool 10 and prevention of suck back.

Dental handpiece 1 is not limited to including two air-retaining portions including first air-retaining portion 33 and second air-retaining portion 34. For example, dental handpiece 1 may include a plurality of first air-retaining portions 33 configured to communicate with air discharge port 32 and a plurality of second air-retaining portions 34 connected to the plurality of first air-retaining portions 33, respectively. In addition, the volume of the recessed portion in second air-retaining portion 34 may be smaller than the volume of the recessed portion in first air-retaining portion 33. Furthermore, the volume of the recessed portion in second air-retaining portion 34 may be the same as the volume of the recessed portion in first air-retaining portion 33.

It should be understood that the above disclosure is illustrative and non-restrictive in every respect. The scope of the present invention is defined by the claimed subject-matter, rather than the description above, and is intended to include any modifications within the claimed subject-matter. The illustrated configurations can be combined as appropriate.

## Claims

1. A dental handpiece (1) comprising:
a body (6) configured to be grasped by a user; and
a head (2) provided at a tip end of the body (6), wherein
the body (6) includes a supply tube (61) configured to supply air to the head (2),
the head (2) includes:
a housing (21);
at least one rotor (27) rotatable in an inside of the housing (21); and
a holding portion (24) configured to hold a cutting tool (10) and rotate the cutting tool (10) with rotation of the at least one rotor (27), and
the housing (21) includes:
at least one air supply port (31) configured to supply the air supplied from the supply tube (61) to the inside so as to rotate the at least one rotor (27) in a specific direction;
an air discharge port (32) disposed on a side closer to a tip end of the cutting tool (10) than the at least one air supply port (31) in a direction along a rotation axis of the cutting tool (10) and configured to discharge the air from the inside;
at least one air-retaining portion configured to communicate with the air discharge port (32) and retain the part of the air supplied from the at least one air supply port (31),
**characterized by**,
at least one diffuser portion (35) configured to change a flow direction of a part of the air supplied from the at least one air supply port (31) so as to direct the part of the air toward the at least one rotor (27) in a direction opposite to the specific direction.

2. The dental handpiece (1) according to claim 1, wherein
the at least one rotor (27) includes:
a first rotor (27A); and
a second rotor (27B) disposed on a side closer to the tip end of the cutting tool (10) than the first rotor (27A) in the direction along the rotation axis,
the at least one air supply port (31) is disposed along a circumferential direction of the first rotor (27A), and
the air discharge port (32) is disposed along a circumferential direction of the second rotor (27B).

3. The dental handpiece (1) according to claim 2, wherein
the at least one diffuser portion (35) is disposed along the circumferential direction of the second rotor (27B).

4. The dental handpiece (1) according to claim 2 or 3, wherein
the at least one air-retaining portion is disposed along the circumferential direction of the second rotor (27B).

5. The dental handpiece (1) according to any one of claims 1 to 4, wherein
the at least one air-retaining portion includes a first air-retaining portion (33) configured to communicate with the air discharge port (32) and a second air-retaining portion (34) having a volume larger than a volume of the first air-retaining portion (33).

6. The dental handpiece (1) according to any one of claims 2 to 4, wherein
the at least one air-retaining portion has a space provided on a side closer to the tip end of the cutting tool (10) than the second rotor (27B) in the direction along the rotation axis.

7. The dental handpiece (1) according to claim to any one of claims 1 to 6, wherein
a cross section of the at least one air-retaining portion along the rotation axis has a tapered shape or an R shape.

8. The dental handpiece (1) according to any one of claims 2 to 7, wherein
the at least one air supply port (31) is disposed so as to allow the air supplied from the at least one air supply port (31) to hit a blade (270A) included in the first rotor (27A) perpendicularly or substantially perpendicularly.

## Patentansprüche

1. Zahnärztliches Handstück (1), aufweisend:
einen Körper (6), der konfiguriert ist, um von einem Benutzer gegriffen zu werden; und
einen Kopf (2), der an einem Spitzenende des Körpers (6) vorgesehen ist, wobei
der Körper (6) ein Zufuhrrohr (61) umfasst, das konfiguriert ist, um dem Kopf (2) Luft zuzuführen,
der Kopf (2) umfasst:
ein Gehäuse (21);
mindestens einen Rotor (27), der in einem Inneren des Gehäuses (21) drehbar ist; und
einen Halteabschnitt (24), der konfiguriert ist, um ein Schneidwerkzeug (10) zu halten und das Schneidwerkzeug (10) mit einer Drehung des mindestens einen Rotors (27) zu drehen, und
das Gehäuse (21) umfasst:
mindestens eine Luftzufuhröffnung (31), die konfiguriert ist, um die Luft, die von dem Zufuhrrohr (61) zugeführt wird, dem Inneren zuzuführen, um den mindestens einen Rotor (27) in einer spezifischen Richtung zu drehen;
eine Luftauslassöffnung (32), die auf einer Seite näher an einem Spitzenende des Schneidwerkzeugs (10) als die mindestens eine Luftzufuhröffnung (31) in einer Richtung entlang einer Drehachse des Schneidwerkzeugs (10) angeordnet ist und konfiguriert ist, um die Luft von dem Inneren auszulassen;
mindestens einen Luftrückhalteabschnitt, der konfiguriert ist, um mit der Luftauslassöffnung (32) in Verbindung zu stehen und den Teil der Luft zurückzuhalten, der von der mindestens einen Luftzufuhröffnung (31) zugeführt wird,
**dadurch gekennzeichnet, dass**
mindestens ein Diffusorabschnitt (35) konfiguriert ist, um eine Strömungsrichtung eines Teils der Luft zu ändern, der von der mindestens einen Luftzufuhröffnung (31) zugeführt wird, um den Teil der Luft zu dem mindestens einen Rotor (27) in einer Richtung entgegengesetzt zu der spezifischen Richtung zu leiten.

2. Zahnärztliches Handstück (1) nach Anspruch 1, wobei
der mindestens eine Rotor (27) umfasst:
einen ersten Rotor (27A); und
einen zweiten Rotor (27B), der auf einer Seite näher an dem Spitzenende des Schneidwerkzeugs (10) als der erste Rotor (27A) in der Richtung entlang der Drehachse angeordnet ist,
die mindestens eine Luftzufuhröffnung (31) entlang einer Umfangsrichtung des ersten Rotors (27A) angeordnet ist, und
die Luftauslassöffnung (32) entlang einer Umfangsrichtung des zweiten Rotors (27B) angeordnet ist.

3. Zahnärztliches Handstück (1) nach Anspruch 2, wobei
der mindestens eine Diffusorabschnitt (35) entlang der Umfangsrichtung des zweiten Rotors (27B) angeordnet ist.

4. Zahnärztliches Handstück (1) nach Anspruch 2 oder 3, wobei
der mindestens eine Luftrückhalteabschnitt entlang der Umfangsrichtung des zweiten Rotors (27B) angeordnet ist.

5. Zahnärztliches Handstück (1) nach einem der Ansprüche 1 bis 4, wobei
der mindestens eine Luftrückhalteabschnitt einen ersten Luftrückhalteabschnitt (33), der konfiguriert ist, um mit der Luftauslassöffnung (32) in Verbindung zu stehen, und einen zweiten Luftrückhalteabschnitt (34) umfasst, der ein Volumen aufweist, das größer als ein Volumen des ersten Luftrückhalteabschnitts (33) ist.

6. Zahnärztliches Handstück (1) nach einem der Ansprüche 2 bis 4, wobei
der mindestens eine Luftrückhalteabschnitt einen Raum aufweist, der auf einer Seite näher an dem Spitzenende des Schneidwerkzeugs (10) als der zweite Rotor (27B) in der Richtung entlang der Drehachse vorgesehen ist.

7. Zahnärztliches Handstück (1) nach einem der Ansprüche 1 bis 6, wobei
ein Querschnitt des mindestens einen Luftrückhalteabschnitts entlang der Drehachse eine sich verjüngende Form oder eine R-Form aufweist.

8. Zahnärztliches Handstück (1) nach einem der Ansprüche 2 bis 7, wobei
die mindestens eine Luftzufuhröffnung (31) so angeordnet ist, dass die von der mindestens einen Luftzufuhröffnung (31) zugeführte Luft senkrecht oder im Wesentlichen senkrecht auf ein Blatt (270A) treffen kann, das in dem ersten Rotor (27A) enthalten ist.

## Revendications

1. Pièce à main dentaire (1) comprenant :
un corps (6) configuré pour être saisi par un utilisateur ; et
une tête (2) prévue à une extrémité de pointe du corps (6), dans laquelle
le corps (6) comporte un tube d'alimentation (61) configuré pour fournir de l'air à la tête (2), la tête (2) comporte :
un logement (21) ;
au moins un rotor (27) rotatif dans un intérieur du boîtier (21) ; et
une partie de maintien (24) configurée pour maintenir un outil de coupe (10) et faire tourner l'outil de coupe (10) avec la rotation de l'au moins un rotor (27), et
le logement (21) comporte :
au moins un orifice d'alimentation en air (31) configuré pour fournir l'air fourni à partir du tube d'alimentation (61) vers l'intérieur de manière à faire tourner l'au moins un rotor (27) dans une direction spécifique ;
un orifice d'évacuation d'air (32) disposé sur un côté plus proche d'une extrémité de pointe de l'outil de coupe (10) que l'au moins un orifice d'alimentation en air (31) dans une direction le long d'un axe de rotation de l'outil de coupe (10) et configuré pour évacuer l'air de l'intérieur ;
au moins une partie de rétention d'air configurée pour communiquer avec l'orifice d'évacuation d'air (32) et retenir la partie de l'air fournie à partir de l'au moins un orifice d'alimentation en air (31), **caractérisée par**, au moins une partie de diffusion (35) configurée pour changer une direction d'écoulement d'une partie de l'air fournie à partir de l'au moins un orifice d'alimentation en air (31) de manière à diriger la partie de l'air vers l'au moins un rotor (27) dans une direction opposée à la direction spécifique.

2. Pièce à main dentaire (1) selon la revendication 1, dans laquelle
l'au moins un rotor (27) comporte :
un premier rotor (27A) ; et
un deuxième rotor (27B) disposé sur un côté plus proche de l'extrémité de pointe de l'outil de coupe (10) que le premier rotor (27A) dans la direction le long de l'axe de rotation,
l'au moins un orifice d'alimentation en air (31) est disposé le long d'une direction circonférentielle du premier rotor (27A), et
l'orifice d'évacuation d'air (32) est disposé le long d'une direction circonférentielle du deuxième rotor (27B).

3. Pièce à main dentaire (1) selon la revendication 2, dans laquelle
l'au moins une partie de diffusion (35) est disposée le long de la direction circonférentielle du deuxième rotor (27B).

4. Pièce à main dentaire (1) selon la revendication 2 ou 3, dans laquelle
l'au moins une partie de rétention d'air est disposée le long de la direction circonférentielle du deuxième rotor (27B).

5. Pièce à main dentaire (1) selon l'une quelconque des revendications 1 à 4, dans laquelle
l'au moins une partie de rétention d'air comporte une première partie de rétention d'air (33) configurée pour communiquer avec l'orifice d'évacuation d'air (32) et une deuxième partie de rétention d'air (34) présentant un volume supérieur à un volume de la première partie de rétention d'air (33).

6. Pièce à main dentaire (1) selon l'une quelconque des revendications 2 à 4, dans laquelle
l'au moins une partie de rétention d'air présente un espace prévu sur un côté plus proche de l'extrémité de pointe de l'outil de coupe (10) que le deuxième rotor (27B) dans la direction le long de l'axe de rotation.

7. Pièce à main dentaire (1) selon l'une quelconque des revendications 1 à 6, dans laquelle
une section transversale de l'au moins une partie de rétention d'air le long de l'axe de rotation présente une forme effilée ou une forme en R.

8. Pièce à main dentaire (1) selon l'une quelconque des revendications 2 à 7, dans laquelle
l'au moins un orifice d'alimentation en air (31) est disposé de manière à permettre à l'air fourni à partir de l'au moins un orifice d'alimentation en air (31) de heurter une pale (270A) incluse dans le premier rotor (27A) perpendiculairement ou sensiblement perpendiculairement.
